# EUROPÄISCHE PATENTSCHRIFT

(11) **EP 1 606 984 B1**
(45) Veröffentlichungstag und Bekanntmachung des Hinweises auf die Patenterteilung: **24.04.2013**
(21) Anmeldenummer: 05104645.6
(22) Anmeldetag: 31.05.2005
(51) Int. Cl.: A01B 59/00, F15B 15/14

(54) **Teleskopierbare Kraftübertragungseinrichtung**
Telescoping force transmitting device
Dispositif télescopant de transmission de force

(30) Priorität: 18.06.2004 DE 102004029577
(43) Veröffentlichungstag der Anmeldung: 21.12.2005
(73) Patentinhaber: Deere & Company, Moline, IL 61265-8098 (US)
(72) Erfinder: Heitlinger, Martin, 76684, Östringen-Odenheim (DE)
(74) Vertreter: Holst, Sönke

(56) Entgegenhaltungen:
- EP-A- 0 695 655
- DE-A1- 2 147 286
- FR-A- 2 756 331
- US-A- 4 944 215
- US-A- 5 090 201

## Beschreibung

Die Erfindung betrifft eine teleskopierbare Kraftübertragungseinrichtung, die ein Rohr, ein darin verschiebbar angeordnetes Führungselement, eine mit dem Führungselement verbundene Stange und einen Anschlag umfasst, wobei das Führungselement bei teleskopierter Stange am Anschlag in Anlage kommt, so dass dann zur Kraftübertragung ein Kraftfluss über die Stange, das Führungselement, den Anschlag und das Rohr übertragbar ist, die Krafteinleitung auf das Rohr im Abstand von dessen Längsachse erfolgt und das Führungselement bei teleskopierter Stange verschwenkbar am Anschlag anliegt siehe z.B FR-A-2756331.

Ackerschlepper werden in der Regel mit Kupplungseinrichtungen zum Anhängen von Anhängefahrzeugen ausgestattet. Bei manchen derartigen Kupplungseinrichtungen besteht die Möglichkeit, die Kupplung hydraulisch zu öffnen. Dazu sind zwei Verbindungen in Form so genannter Hubspindeln zwischen den beiden Hubarmen der Unterlenker einer Dreipunktschnittstelle und der Kupplung vorgesehen. Eine Bewegung der Hubarme nach unten mittels der Kraftheberzylinder der Hubarme der Unterlenker der Dreipunktschnittstelle bewirkt, dass sich auch die Hubspindeln nach unten bewegen, so dass sie an ihren unteren Enden die Kupplung nach unten verschwenken. Dadurch gerät ein am Ende der Kupplung angeordneter Zughaken mit einer Anhängerkupplung außer Eingriff. Derartige Kupplungseinrichtungen werden beispielsweise von der Anmelderin unter der Bezeichnung Pick-Up Hitch für Ackerschlepper mit der Serienbezeichnung 5620 bis 5820 und 6120 bis 6920 S hergestellt und vertrieben und wurden in der EP 0 695 655 A beschrieben.

Diese Hubspindeln sind teleskopierbare Anordnungen mit einem Rohr und einer darin verschiebbar gelagerten Stange. Die Stange wird an ihrem oberen Ende am Anlenkpunkt der Hubstange am Hubarm eines Unterlenkers angelenkt. Das Rohr ist quadratischen Querschnitts. Die Stange ist an ihrem unteren Ende in ein verschiebbares Element eingeschraubt, das im Rohr verschiebbar gelagert ist. Dadurch ist die Stange gegenüber dem Rohr frei beweglich. Werden die Hubarme an das obere Ende ihres freien Verstellwegs nach oben verbracht, schlägt das Element an einem Anschlag des Rohrs an, so dass eine weitere Relativbewegung zwischen Stange und Rohr nicht möglich ist. Bei weiterer Bewegung der Hubarme nach oben bewegt sich das Rohr mit und überträgt die Bewegung auf die Kupplung.

Im Stand der Technik ist das Rohr in seinem unteren Bereich durch eine an seine in Fahrtrichtung vordere Seitenfläche angeschweißte Konsole mit der Kupplung verbunden. Die Konsole ist schwenkbar an einem Betätigungshebel der Einrichtung zum Öffnen und Schließen der Kupplung angelenkt. Durch diese Anordnung befinden sich die Stange und das Rohr nicht zentrisch zum Kraftfluss. Bei voller Krafteinleitung wird insbesondere die Stange gebogen, was zu einer dauerhaften Verformung der Hubspindel und damit zu Funktionsverlusten führen kann.

Die als gattungsbildend angesehene US 5 090 201 A beschreibt eine teleskopierbare Kraftübertragungseinrichtung in Form eines Pedaldruckgebers, bei denen ein zylindrisches Rohr ein inneres Führungselement mit kreisförmigem Querschnitt aufnimmt, das an einer über ihre gesamte Länge zylindrischen Stange angebracht ist, welche sich aus dem Rohr nach außen erstreckt. Bei teleskopiertem Führungselement kommt eine abgerundete Endfläche an einer geraden Fläche eines endseitig am Rohr angebrachten Deckels zum Anliegen. Die von der Stange durchdrungene Öffnung des Deckels erlaubt ein Verschwenken der Stange und des Führungselements.

Die der Erfindung zu Grunde liegende Aufgabe wird darin gesehen, eine Kraftübertragungseinrichtung zu schaffen, die sich insbesondere zum fernbetätigten Bewegen bzw. Öffnen und Schließen der Kupplung eignet, bei der die genannten Nachteile nicht oder in geringerem Maße vorliegen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Auf diese Weise erreicht man, dass sich die Stange dann, wenn sie Kräfte überträgt, in Richtung des wirkenden Kraftflusses ausrichten kann. Dadurch werden unerwünschte Verformungen der Stange vermieden.

Die Stange durchdringt eine ihr zugeordnete Öffnung im Anschlag. Um das Verschwenken der Stange zu ermöglichen, ist der Durchmesser der Öffnung größer als der Durchmesser der Stange in dem Bereich, der sich in der Öffnung befindet, wenn das Führungselement am Anschlag anliegt, gewählt. Hier bietet sich insbesondere eine zum Anschlag hin verengende konische Form an. Die übrige Länge der Stange ist demgegenüber dicker, so dass die eingeschobene Stange an der Wand der Öffnung anliegt und sich eine Abdichtwirkung zum Verhindern des Eindringens von Verunreinigungen bildet.

Die einander berührenden Flächen des Anschlags und des Führungselements sind komplementär zueinander geformt, um die gewünschte Beweglichkeit zu erzielen. Es wäre grundsätzlich möglich, zylindrische Oberflächen zu verwenden, die ein Verschwenken der Stange um eine Achse zu erlauben. Diese Achse wäre dann möglichst exakt senkrecht zum Kraftfluss auszurichten. Um dieses Erfordernis zu vermeiden, können sphärische Oberflächen von Anschlag und Führungselement verwendet werden.

Das Führungselement ist mit der Stange verbunden und führt ihre Schwenkbewegung mit aus. Um Kollisionen mit der Wand des Rohrs zu vermeiden, ist das Führungselement vorzugsweise in seinem in axialer Richtung von der Stange beabstandeten Bereich ebenfalls konisch geformt. Die konische Form befindet sich zweckmäßigerweise nur an einer Seite des Führungselements, nämlich der, die sich beim Verschwenken der Stange in Richtung des Kraftflusses der Wand des Rohrs nähert, während die gegenüberliegende Seite des Führungselements zylindrisch geformt ist. Dadurch vermeidet man Probleme beim Einschieben des Führungselements in das Rohr.

Die erfindungsgemäße Kraftübertragungseinrichtung eignet sich insbesondere zum Verschwenken einer Kupplungseinrichtung eines Fahrzeugs, z. B. eines Ackerschleppers, mittels eines Kraftheberzylinders, der insbesondere zum Bewegen eines Unterlenkers einer Dreipunktanbauschnittstelle dient.

In den Zeichnungen sind drei nachfolgend näher beschriebene Ausführungsbeispiele der Erfindung dargestellt. Es zeigt:
- Fig. 1: eine schematische Seitenansicht des rückwärtigen Bereichs eines Ackerschleppers mit einer Dreipunkt-Geräteanbauschnittstelle und einer Kupplung,
- Fig. 2: eine rückwärtige, teilgeschnittene Ansicht der Kupplung und einer Kraftübertragungseinrichtung entlang der Linien 2-2 der Figur 1,
- Fig. 3: eine schematische Draufsicht auf die Kupplung und die Kraftübertragungseinrichtungen entlang der Linien 3-3 in Figur 1,
- Fig. 4: eine perspektivische, teilgeschnittene Ansicht der Kraftübertragungseinrichtung im eingezogenen Zustand,
- Fig. 5: eine perspektivische, teilgeschnittene Ansicht der Kraftübertragungseinrichtung aus Figur 3 im ausgezogenen Zustand,
- Fig. 6: eine vergrößerte Teilansicht einer zweiten Ausführungsform der Kraftübertragungseinrichtung, und
- Fig. 7: eine vergrößerte Teilansicht einer dritten Ausführungsform der Kraftübertragungseinrichtung.

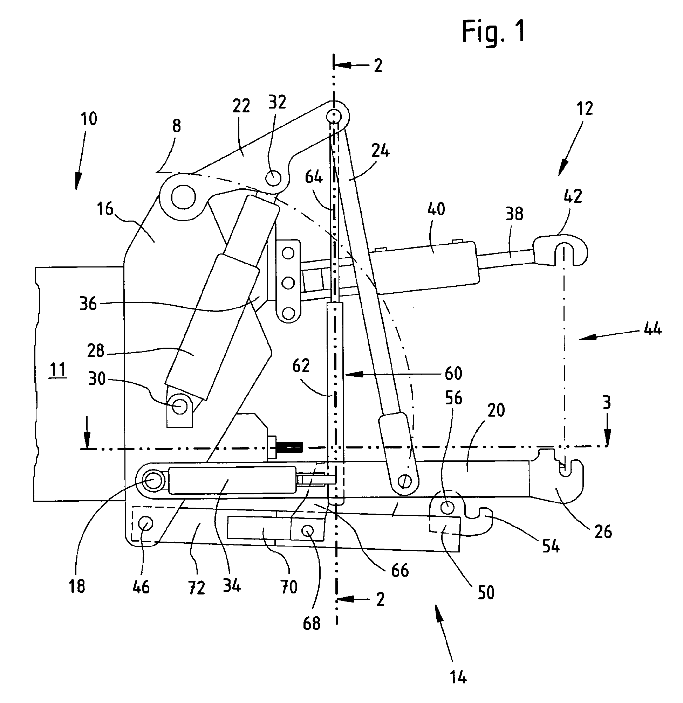

Bei einem Ackerschlepper 10, von dem in der Figur 1 lediglich der hintere Bereich dargestellt ist, handelt es sich um einen üblichen Traktor, der eine Heckschnittstelle 12 und eine Kupplungseinrichtung 14 aufweist. Der Umfang eines Hinterrades ist mit 8 gekennzeichnet.

Am rückwärtigen Ende eines Fahrgestells 11 des Ackerschleppers 10 ist ein Träger 16 fest montiert. An dem Träger 16 sind über Anlenkstellen 18 zwei seitliche, nach hinten ausgerichtete Unterlenker 20 auf übliche Weise verschwenkbar angelenkt. Die Unterlenker 20 lassen sich durch zugehörige, an dem Träger 16 angelenkte Hubarme 22 und Hubstreben 24 anheben und absenken. Sie tragen an ihren freien Enden je einen Kopplungspunkt 26.

Die Betätigung der Hubarme 22 erfolgt auf übliche Weise durch Kraftheberzylinder 28, deren jeweils eines Ende 30 an dem Träger 16 und deren jeweils anderes Ende an einer Anlenkstelle 32 des zugehörigen Hubarms 22 gelenkig angreift. Die Querbewegung der Unterlenker 20 lässt sich durch übliche Stabilisierungslenker 34 begrenzen.

Der Träger 16 trägt einen Lagerbock 36, an dem ein Oberlenker 38 angelenkt ist. In den Oberlenker 38 ist ein hydraulisch betätigbarer Oberlenkerzylinder 40 integriert, durch den sich die Oberlenkerlänge einstellen läßt. Am freien Ende des Oberlenkers 38 ist ein Kopplungspunkt 42 befestigt.

Die Kopplungspunkte 26 der Unterlenker 20 und der Kopplungspunkt 42 des Oberlenkers 38 bilden eine als Dreipunkt-Geräteanbau 44 ausgebildete Anbauschnittstelle, die für die Aufnahme von nicht näher dargestellten Anbaugeräten oder Adaptern, die der Befestigung von Spezialgeräten dienen, geeignet ist.

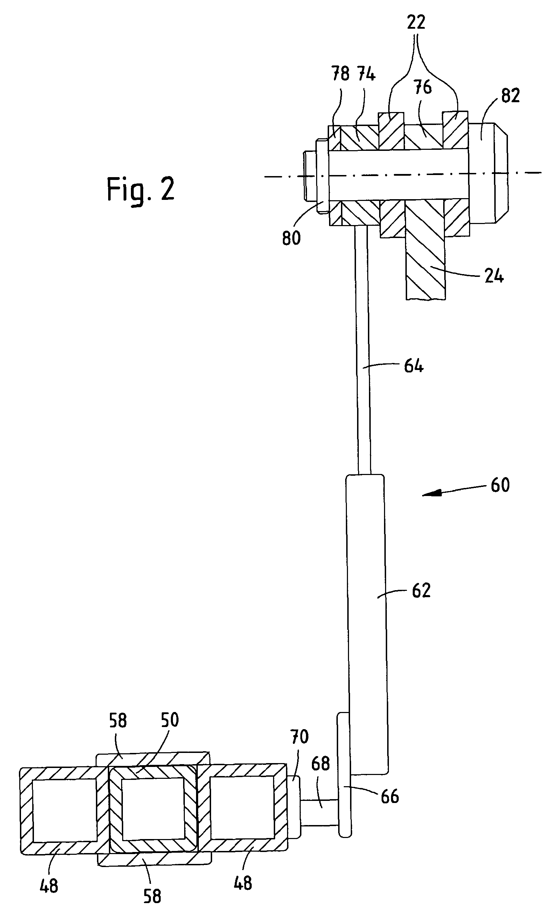

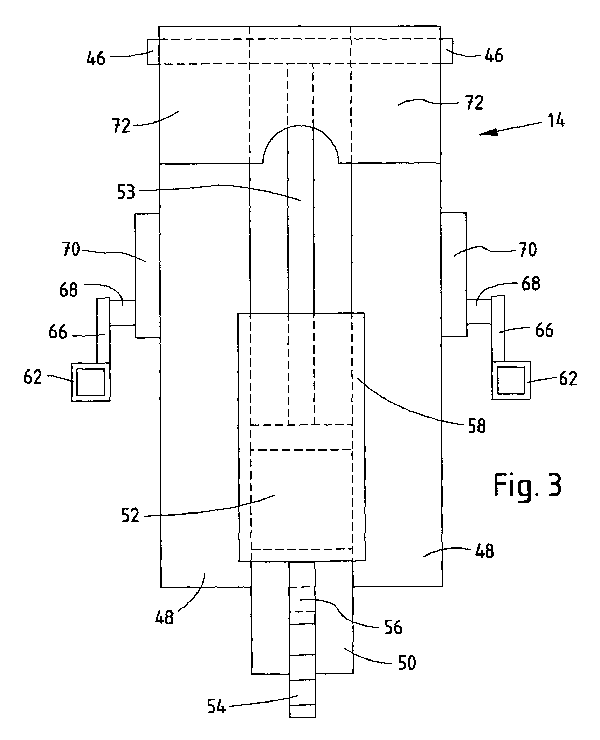

Unterhalb der Heckschnittstelle 12 ist am Fahrgestell 11 des Ackerschleppers 10 die Kupplungseinrichtung 14 um eine horizontal und quer zur Vorwärtsrichtung des Ackerschleppers 10 verlaufende Achse 46 schwenkbar gelagert. Der Aufbau der Kupplungseinrichtung 14 ist anhand der Figuren 2 und 3 gut erkennbar. Die Kupplungseinrichtung 14 umfasst zwei Längsträger 48 mit hohlem, quadratischen Profil, die sich von der Achse 46 nach hinten erstrecken und zwischen sich einen Zwischenraum freilassen, in dem ein Kupplungsstück 50 in Längsrichtung der Längsträger 48, d. h. in Fahrtrichtung des Ackerschleppers 10, verschiebbar gelagert ist. Die Verschiebung des Kupplungsstücks 50 erfolgt durch einen Hydraulikzylinder 52, dessen Gehäuse mit dem Kupplungsstück 50 und dessen Kolbenstange 53 mit den Längsträgern 48 verbunden ist. Das Kupplungsstück 50 trägt einen Zughaken 54 und eine Zugöse 56, um ein Anhängefahrzeug an den Ackerschlepper 10 anhängen zu können. Unter- und oberhalb des Kupplungsstücks 50 erstrecken sich Deckbleche 58 zwischen den Längsträgern 48, die zur vertikalen Abstützung und Fixierung des Kupplungsstücks 50 dienen.

Eine mit der Kolbenstange 53 zusammenwirkendes Verrastungseinrichtung (nicht eingezeichnet) ermöglicht ein Verriegeln der Kupplungseinrichtung 14 in seiner etwa horizontalen Stellung, wie sie in der Figur 1 dargestellt ist. Dadurch besteht die Möglichkeit, die Kraftheberzylinder 28 der Heckschnittstelle 12 nach dem Verriegeln der Kupplungseinrichtung 14 wieder nach unten zu bewegen. Bevor die Kupplungseinrichtung 14 abgesenkt werden kann, wird die Verrastungseinrichtung wiederum durch Anheben der Kupplungseinrichtung 14 mit den Kraftheberzylindern 28 entlastet, erst dann wird die Verrastungseinrichtung gelöst.

Die beschriebene Kupplungseinrichtung ist nur ein mögliches Ausführungsbeispiel. Es können auch beliebige andere, verschwenkbare Kupplungseinrichtungen vorgesehen sein, wie sie beispielsweise in der EP 0 695 655 A beschrieben werden.

Zum Verschwenken der Kupplungseinrichtung 14 um die Achse 46 sind so genannte Kraftübertragungseinrichtungen 60 vorgesehen, die auch als Hubspindeln bezeichnet werden. Die Kraftübertragungseinrichtungen 60 setzen sich jeweils aus einem unteren Rohr 62 mit rechteckigem Querschnitt und einer darin angeordneten, teleskopierbaren Stange 64 mit rundem Querschnitt zusammen. Jede der Kraftübertragungseinrichtungen 60 verbindet eine Seite der Kupplungseinrichtung 14 mit dem jeweils darüber angeordneten Hubarm 22.

Am unteren Ende des Rohrs 62 ist eine flache, trapezförmige Konsole 66 angeschweißt, an deren unteren Ende ein rohrförmiges Verbindungselement 68 drehbar angelenkt ist. Das Verbindungselement 68 erstreckt sich horizontal und quer zur Fahrtrichtung. Die Konsole 66 ist durch eine Schraube um die Achse des Verbindungselements 68 drehbar mit dem Verbindungselement 68 verbunden. An seinem anderen Ende ist das Verbindungselement 68 mit einem Hebelarm 70 starr verbunden, der wiederum an einer starr mit den Längsträgern 48 verbundenen Halterung 72 angeschweißt ist.

Am oberen Ende ist die Stange 64 mit einer Hülse 74 verbunden, durch deren mittige Bohrung sich ein Bolzen 76 erstreckt. Der Bolzen 76 erstreckt sich weiterhin durch zwei Schenkel einer mit dem Hubarm 22 verbundenen Gabel, durch eine zwischen den Schenkeln der Gabel des Hubarms 22 angeordnete Öffnung an der Oberseite einer Hubstrebe 24 und durch eine an der Außenseite der Hülse 74 anliegende Unterlegscheibe 78. Ein Sicherungssplint 80 verhindert im Zusammenwirken mit dem Kopf 82 des Bolzens 76 dessen axiale Verschiebung.

Die Stange 64 ist gegenüber dem Rohr 62 teleskopierbar gelagert. Werden die Hubarme 22 jedoch durch die Kraftheberzylinder 28 derart weit angehoben, dass das Rohr 62 mit einem oberen Anschlag des Rohrs 62 zusammenwirkt, erfolgt über die Kraftübertragungseinrichtungen 60 eine Übertragung der Bewegung auf die Kupplungseinrichtung 14. Letztere kann somit nach oben oder unten bewegt werden, um die Zugöse eines Anhängerfahrzeugs vom Arbeitsplatz des Bedieners in der Kabine des Ackerschleppers 10 aus fremdkraftbetätigt an den Zughaken 54 ankoppeln oder davon lösen zu können. Ein potentielles Problem ist allerdings die Verbindung zwischen dem Verbindungselement 68 und dem Rohr 62 durch die Konsole 66, da die Krafteinleitung gegenüber der Längsachse des Rohrs 62 versetzt erfolgt. Während das Rohr 62 in der Regel hinreichend steif ist, kann sich die Stange 64 in unerwünschter Weise aufgrund der wirkenden Drehmomente verbiegen, wenn sie nur axial verschiebbar im Rohr 62 gelagert ist.

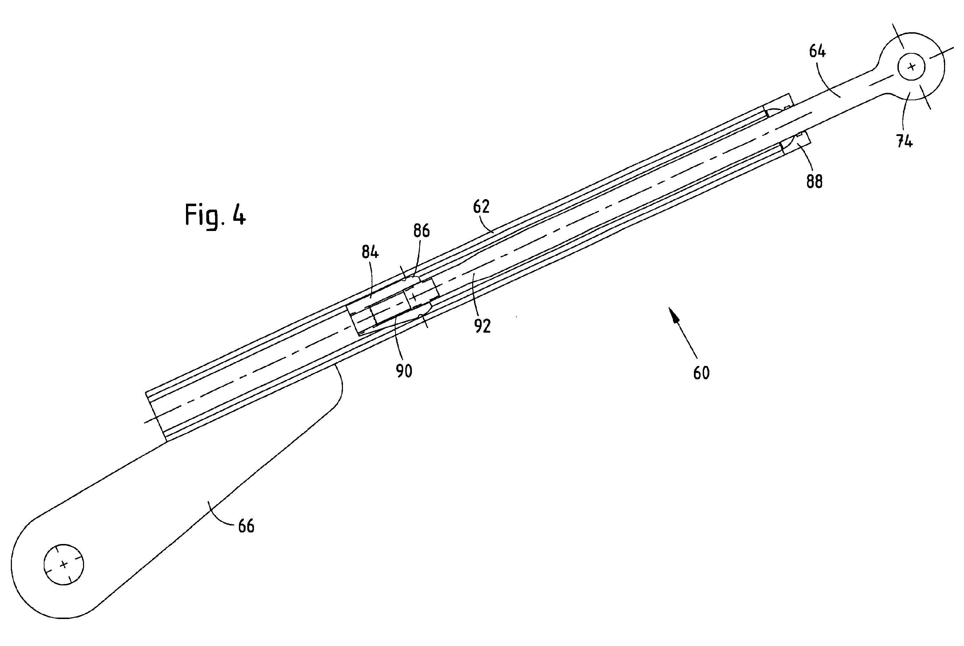

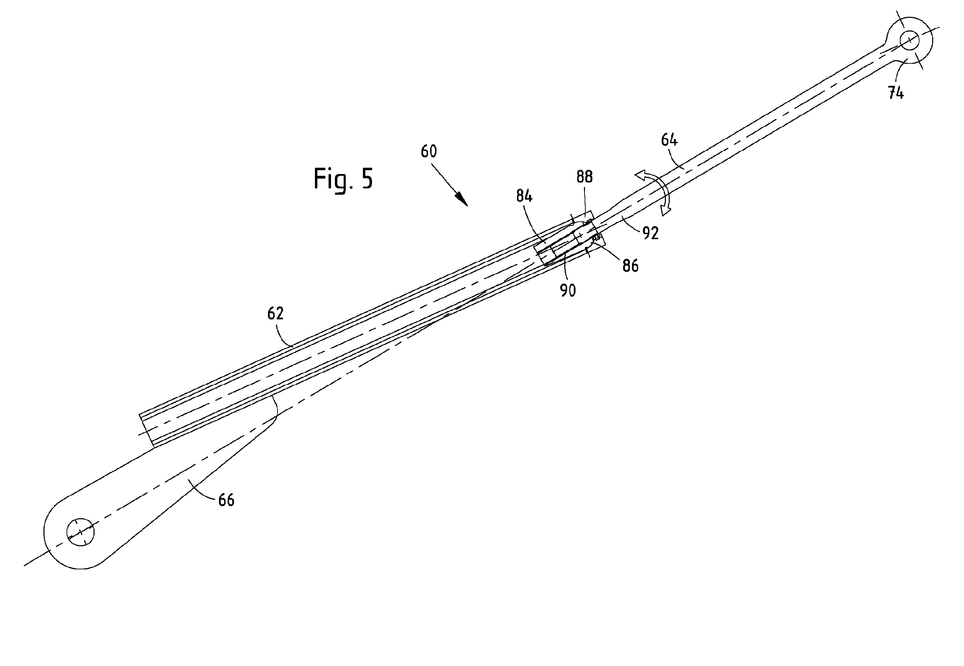

Eine erfindungsgemäße Kraftübertragungseinrichtung 60 ist in der Figur 4 in eingezogener Position und in Figur 5 in teleskopierter Position dargestellt. Im Innenraum des Rohrs 62 ist die Stange 64 an ihrem unteren Ende mit einem Führungselement 84 verbunden, das wiederum an der Innenwand des Rohrs 62 anliegt. Das Führungselement 84 ist in Längsrichtung des Rohrs 62 im Rohr 62 verschiebbar. Durch zusammenwirkende Gewinde 90 im Innern des Führungselements 84 und an der Außenseite des unteren Bereichs der Stange 64 besteht die Möglichkeit einer axialen Verstellung der Position der Stange 64 gegenüber dem Führungselement 84, indem die Stange 64 um ihre Längsachse gedreht wird. Das Führungselement 84 weist einen etwa tropfenförmigen Querschnitt auf. Die Oberseite 86 des Führungselements ist halbkugelförmig. Der Bereich des Führungselements 84 unterhalb der halbkugelförmigen Oberseite verengt sich an seiner der Konsole 66 zugewandten Seite, die in Figur 4 unten eingezeichnet ist, sukzessive nach unten. Dadurch kann das Führungselement 84 sich im teleskopierten Zustand in Richtung des Kraftflusses bewegen, ohne dass der Bereich des Führungselements 84 unterhalb der halbkugelförmigen Oberseite gegen die Innenwand des Rohrs 62 stoßen würde. Die andere, der Konsole 66 abgewandte Seite des Bereichs des Führungselements 84 unterhalb der halbkugelförmigen Oberseite, die in Figur 4 oben eingezeichnet ist, verengt sich jedoch nicht nach unten. Dadurch wird ein mögliches Verkanten beim Einschieben des Führungselements 84 in das Rohr 62 vermieden.

Am oberen Ende des Rohrs 62 ist ein Anschlag 88 mit einer kugelschalenförmigen Unterseite angebracht. An einer mittigen, axialen Bohrung des Anschlags 88 liegt die Stange 64 an. Sie ist über fast ihre ganze Länge zylindrisch, verengt sich jedoch in einem Bereich 92 unmittelbar oberhalb des Führungselements 84 konisch.

Solange sich das Führungselement 84 unterhalb des Anschlags 88 befindet, wird die radiale Position der Stange 64 durch das Führungselement 84 (am unteren Ende der Stange 64) und durch den an der Bohrung des Anschlags 88 anliegenden zylindrischen Bereich der Stange 64 definiert. Die Stange 64 ist deshalb in radialer Richtung gegenüber dem Rohr 62 fixiert.

Sobald das Führungselement 84 aber am Anschlag 88 anliegt, befindet sich der konisch verengte Bereich 92 in der Bohrung des Anschlags 88, so dass dort die radiale Führung entfällt. Die halbkugelförmige Oberseite 86 des Führungselements 84 ist nunmehr in der kugelschalenförmigen Unterseite des Anschlags 88 drehbar gelagert. Falls durch die Kraftübertragungseinrichtung 60 eine Kraftübertragung stattfindet, was erst dann der Fall ist, wenn das Führungselement 84 am Anschlag 88 anliegt, kann sich die Stange 64 somit in Richtung des Kraftflusses ausrichten, so dass sie sich nicht in unerwünschter Weise verformen kann. Das Rohr 62 ist zwar auch Drehmomenten ausgesetzt, es ist jedoch wesentlich kräftiger als die Stange 64, so dass es sich nicht verformt. Durch die Kugelformen der Unterseite des Anschlags 88 und der Oberseite des Führungselements 84 kann die Stange 64 Kräften in Fahrtrichtung und seitlicher Richtung ausweichen.

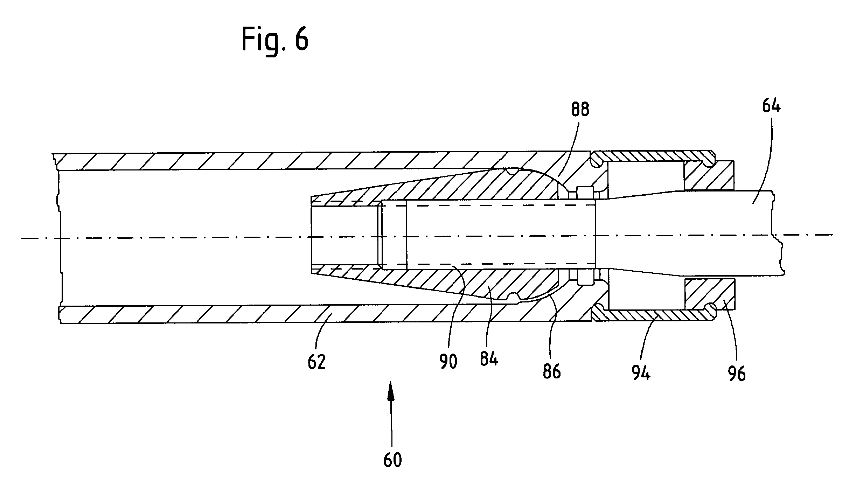

Die Figur 6 zeigt eine vergrößerte Ansicht einer zweiten Ausführungsform, die im Wesentlichen der ersten Ausführungsform entspricht. Im Unterschied dazu ist allerdings an der Oberseite des Anschlags 88 eine Hülse 94 angeordnet, die oberhalb des Anschlags 88 eine den zylindrischen Abschnitt der Stange 64 umhüllende Dichtung 96 zum Schutz gegen in das Rohr 62 eindringende Verunreinigungen trägt.

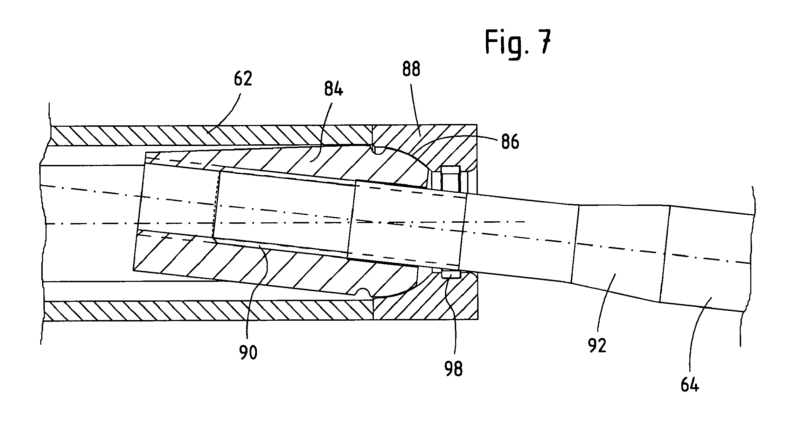

Schließlich zeigt die Figur 7 eine vergrößerte Ansicht einer dritten Ausführungsform, die im Wesentlichen der ersten Ausführungsform entspricht. In dieser Ausführungsform ist eine ringförmige Stangenführung 98 in der Öffnung des Anschlags 88 angeordnet. Sie besteht aus verschleißfestem Material, um den Verschleiß des Anschlags 88 durch die in der Öffnung sich bewegende Stange 64 zu begrenzen. Selbstverständlich kann die Hülse 94 mit der Dichtung 96 gemäß der Ausführungsform aus Figur 6 auch in der Ausführungsform nach Figur 7 Verwendung finden.

## Patentansprüche

1. Teleskopierbare Kraftübertragungseinrichtung (60), die ein Rohr (62), ein darin verschiebbar angeordnetes Führungselement (84), eine mit dem Führungselement (84) verbundene Stange (64) und einen Anschlag (88) umfasst, wobei das Führungselement (84) bei teleskopierter Stange (64) am Anschlag (88) in Anlage kommt, so dass dann zur Kraftübertragung ein Kraftfluss über die Stange (64), das Führungselement (84), den Anschlag (88) und das Rohr (62) übertragbar ist, die Krafteinleitung auf das Rohr (62) im Abstand von dessen Längsachse erfolgt, und das Führungselement (84) bei teleskopierter Stange (64) verschwenkbar am Anschlag (88) anliegt, **dadurch gekennzeichnet, dass** die Stange (64) in ihrem dem Führungselement (84) benachbarten Bereich (92) gegenüber der verbleibenden Länge der Stange (64) so verengt ist, dass das Verschwenken ermöglicht wird.

2. Kraftübertragungseinrichtung (60) nach Anspruch 1, **dadurch gekennzeichnet, dass** die bei teleskopierter Stange (64) aneinander zum Anliegen kommenden Flächen des Anschlags (88) und des Führungselements (84) komplementär zylindrisch oder kugelschalenförmig geformt sind.

3. Kraftübertragungseinrichtung (60) nach Anspruch 1 oder 2, **dadurch gekennzeichnet, dass** die Stange (64) in ihrem dem Führungselement (84) benachbarten Bereich (92) gegenüber der verbleibenden Länge der Stange (64) konisch geformt ist.

4. Kraftübertragungseinrichtung (60) nach einem der vorhergehenden Ansprüche, **dadurch gekennzeichnet, dass** das Führungselement (84) in seinem der Stange (64) abgewandten Bereich konisch geformt ist.

5. Kraftübertragungseinrichtung (60) nach Anspruch 4, **dadurch gekennzeichnet, dass** das Führungselement (84) nur an einer Seite konisch geformt ist.

6. Kraftübertragungseinrichtung (60) nach einem der Ansprüche 1 bis 4, **gekennzeichnet durch** eine in der von der Stange (64) durchdrungenen Öffnung des Anschlags (88) angeordnete, ringförmige Stangenführung (98) aus verschleißarmem Material.

7. Kupplungseinrichtung (14) eines Fahrzeugs, insbesondere eines Ackerschleppers (10), die um eine horizontale und quer zur Vorwärtsrichtung verlaufende Achse (46) schwenkbar an einem Fahrgestell (11) des Fahrzeugs angelenkt ist und durch wenigstens eine teleskopierbare Kraftübertragungseinrichtung (60) nach einem der vorhergehenden Ansprüche mit einem Kraftheberzylinder (28) verbunden ist, wobei die Krafteinleitung auf das Rohr (62) im Abstand von dessen Längsachse erfolgt.

8. Fahrzeug, insbesondere Ackerschlepper (10) mit einer Kupplungseinrichtung (14) nach Anspruch 7.

## Claims

1. Telescopic force transmitting device (60) which comprises a tube (62), a guide element (84) arranged displaceably therein, a rod (64) connected to the guide element (84) and a stop (88), wherein, when the rod (64) is extended telescopically, the guide element (84) comes to bear against the stop (88) such that then, for transmitting force, a force flux is transmittable via the rod (64), the guide element (84), the stop (88) and the tube (62), force is introduced to the tube (62) at a distance from the longitudinal axis thereof, and, when the rod (64) is extended telescopically, the guide element (84) bears pivotably against the stop (88), **characterized in that** the rod (64), in the region (92) thereof adjacent to the guide element (84), is narrowed in relation to the remaining length of the rod (64) in such a manner that pivoting is made possible.

2. Force transmitting device (60) according to Claim 1, **characterized in that** those surfaces of the stop (88) and of the guide element (84) which come to bear against each other when the rod (64) is extended telescopically are shaped in a complementarily cylindrical manner or in the shape of a spherical shell.

3. Force transmitting device (60) according to Claim 1 or 2, **characterized in that** the rod (64), in the region (92) thereof adjacent to the guide element (84), is shaped conically in relation to the remaining length of the rod (64).

4. Force transmitting device (60) according to one of the preceding claims, **characterized in that** the guide element (84) is shaped conically in the region thereof which faces away from the rod (64).

5. Force transmitting device (60) according to Claim 4, **characterized in that** the guide element (84) is shaped conically only on one side.

6. Force transmitting device (60) according to one of Claims 1 to 4, **characterized by** an annular rod guide (98) made of a low-wearing material and arranged in the opening in the stop (88) that is penetrated by the rod (64).

7. Coupling device (14) of a vehicle, in particular of a tractor (10), which coupling device is coupled to a chassis (11) of the vehicle so as to be pivotable about a horizontal axis (46) running transversely with respect to the forwards direction, and is connected by at least one telescopic force transmitting device (60) according to one of the preceding claims to a power lift cylinder (28), wherein force is introduced to the tube (62) at a distance from the longitudinal axis thereof.

8. Vehicle, in particular tractor (10), with a coupling device (14) according to Claim 7.

## Revendications

1. Dispositif de transmission de force télescopique (60), qui comprend un tube (62), un élément de guidage (84) disposé de manière coulissante dans celui-ci, une tige (64) connectée à l'élément de guidage (84) et une butée (88), l'élément de guidage (84) venant en appui contre la butée (88) lorsque la tige (64) est télescopée, de telle sorte que pour la transmission de force, un flux de force puisse alors être transmis par le biais de la tige (64), de l'élément de guidage (84), de la butée (88) et du tube (62), l'introduction de force sur le tube (62) s'effectuant à distance de son axe longitudinal, et l'élément de guidage (84) s'appliquant contre la butée (88) de manière pivotante lorsque la tige (64) est télescopée, **caractérisé en ce que** la tige (64) est resserrée dans sa région (92) adjacente à l'élément de guidage (84) par rapport à la longueur restante de la tige (64) dans une telle mesure que le pivotement soit possible.

2. Dispositif de transmission de force (60) selon la revendication 1, **caractérisé en ce que** les surfaces de la butée (88) et de l'élément de guidage (84) venant en appui l'une contre l'autre lorsque la tige (64) est télescopée sont formées de manière complémentaire sous forme cylindrique ou sous forme de coque sphérique.

3. Dispositif de transmission de force (60) selon la revendication 1 ou 2, **caractérisé en ce que** la tige (64) est formée sous forme conique dans sa région (92) adjacente à l'élément de guidage (84) par rapport à la longueur restante de la tige (64).

4. Dispositif de transmission de force (60) selon l'une quelconque des revendications précédentes, **caractérisé en ce que** l'élément de guidage (84) est formé sous forme conique dans sa région opposée à la tige (64).

5. Dispositif de transmission de force (60) selon la revendication 4, **caractérisé en ce que** l'élément de guidage (84) est formé sous forme conique seulement d'un côté.

6. Dispositif de transmission de force (60) selon l'une quelconque des revendications 1 à 4, **caractérisé par** un guidage de tige (98) en matériau à faible usure, de forme annulaire, disposé dans l'ouverture de la butée (88) traversée par la tige (64).

7. Dispositif d'accouplement (14) d'un véhicule, en particulier d'un tracteur agricole (10), qui est articulé de manière à pouvoir pivoter sur un châssis (11) du véhicule autour d'un axe (46) s'étendant horizontalement et transversalement à la direction d'avance, et qui est connecté par au moins un dispositif de transmission de force télescopique (60) selon l'une quelconque des revendications précédentes, à un vérin de levage (28), l'introduction de force sur le tube (62) s'effectuant à distance de son axe longitudinal.

8. Véhicule, en particulier tracteur agricole (10) comprenant un dispositif d'accouplement (14) selon la revendication 7.
